# EUROPEAN PATENT APPLICATION

(11) **EP 3 839 750 A1**
(43) Date of publication of application: **23.06.2021**
(21) Application number: 19306678.4
(22) Date of filing: 18.12.2019
(51) Int. Cl.: G06F 12/14, G06F 21/79, G06F 21/75, G11C 5/14

(54) **METHOD FOR SECURE EXECUTING OF A SECURITY RELATED PROCESS**

(71) Applicant: THALES DIS FRANCE SA, 92190 Meudon (FR); THALES DIS DESIGN SERVICES SAS, 13590 Meyreuil (FR)
(72) Inventor: LOUBET MOUNDI, PHILIPPE, 92190 Meudon (FR); NAURA, David, 92190 Meudon (FR); COULON, Jean Roch, 92190 Meudon (FR)
(74) Representative: Bricks, Amélie

(57) **Abstract**

The present invention relates to a method for executing a security related process comprising at least a first operation and a subsequent programming operation of a memory area in a first memory row of a first memory of a system and using as input security data stored in said second memory of said system, wherein said first memory is a non-volatile memory and said system comprises a first memory charge pump, said method comprising, when the execution of said security related process is triggered:
- opening (S2) the first memory row
- charging (S3) said first memory charge pump,
- performing (S4) said first operations of the security related process, based on said security data from the second memory,
- performing (S5) said programming operation of said memory area in said opened first memory row using said charged charge pump.

## Description

### FIELD OF THE INVENTION

The present invention relates to a method for securely executing a security related process comprising Non Volatile Memory (NVM) programming, said method protecting the writing of information in a NVM memory, and more particularly preventing NVM programming detection by an attacker.

### BACKGROUND OF THE INVENTION

When a security related process comprising sensitive operations such as cryptographic operations is being executed, it may be required from time to time to write some data to a non-volatile memory (NVM). For example, most secure devices and algorithms rely on hardware security sensors or software countermeasures which monitor the execution environment or the behavior of the device or algorithm to be protected. When an abnormal behavior is detected, such devices or algorithm usually keep track of such a detection by updating a security counter value in a non-volatile memory (NVM).

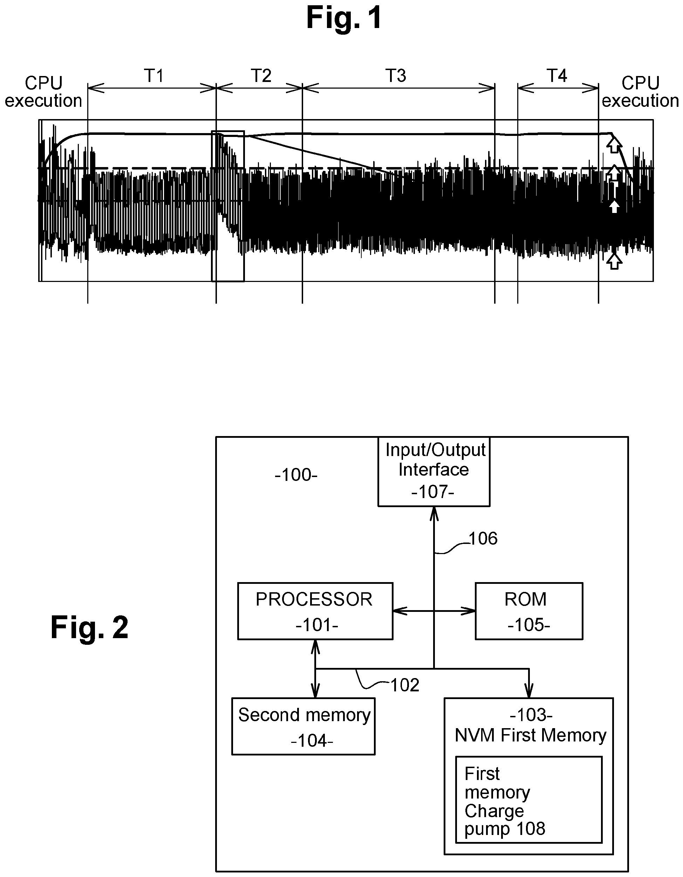

A problem is that writing such a value in a NVM requires charging a NVM charge pump, which induces a spike of the current consumption of the device, as shown on **Figure 1****.** As a result, an attacker monitoring the power consumption may easily detect such a charging of the pump, be aware that a write operation in the NVM is being performed, and use it for his own profit. For example, in the case of a security counter update, he may trigger a power cut off in order to prevent the update of the security counter. By doing so, the counter is never updated and the attacker may perform attacks again and again until he succeeds.

Consequently, there is a need for a method for securely executing a security related process comprising NVM programming and enabling to program the NVM without any visible impact on the device power consumption.

### SUMMARY OF THE INVENTION

For this purpose and according to a first aspect, this invention therefore relates to a method for executing a security related process comprising at least a first operation and a subsequent programming operation of a memory area in a first memory row of a first memory of a system and using as input security data stored in a second memory of said system, wherein said first memory is a non-volatile memory and said system comprises a first memory charge pump, said method comprising, when the execution of said security related process is triggered:
- opening the first memory row,
- charging said first memory charge pump,
- performing said first operations of the security related process, based on said security data from the second memory,
- performing said programming operation of said memory area in said opened first memory row using said charged charge pump.

By doing so, the charge pump is precharged and the row is open even before the execution of the first operations of the security related process starts. Then, when the programming operation is performed, it is performed much more quickly, without waiting for the charging of the pump and the opening of the first row, and it does not induce a current consumption spike that could be detected by an attacker.

The security data used for performing the first operations of the security related process may be copied from the first memory to the second memory before charging the first memory charge pump or opening the first memory row.

Such a copy operation ensures that this data remains available, in the second memory, while the charged state of the charge pump prevents any reading of the first memory.

In an embodiment wherein said system comprises a hardware security sensor or is configured for executing a software countermeasure, said programming operation of the method according to the first aspect may comprise writing, in said first memory, permanent security counters logging some abnormal behavior detected by said hardware security sensor or said software countermeasure.

Said second memory may be among a cache memory, a Random Access memory (RAM), a Non Volatile memory (NVM) or a Read Only memory (ROM).

Said first memory charge pump may be charged at a predetermined frequency such that it induces no visible spike of the current consumption of the system.

By doing so, no current consumption spike occurs because of the charging of the pump, even before the execution of the first operations.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a non-transitory computer readable medium storing executable computer code that when executed by an system comprising at least one processor, a first memory, a first memory charge pump and a second memory performs the method according to the first aspect.

According to a fourth aspect, this invention therefore relates also to an system comprising at least one processor, a first memory, a first memory charge pump and a second memory configured to perform the method according to the first aspect.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an oscilloscope snapshot of a NVM programming current consumption according to the prior art;
- Figure 2 is a schematic illustration of a system according to an embodiment of the present invention;
- Figure 3 is a schematic illustration of a method according to an embodiment of the present invention;
- Figure 4 is a schematic illustration of an oscilloscope snapshot of a NVM programming current consumption of a system according to an embodiment of the present invention.

### DETAILED DESCRIPTION OF EMBODIMENTS OF THE INVENTION

The invention aims at securing the execution of a security related process comprising a silent programing of a memory area of a non-volatile memory (NVM), called first memory, of a system.

**Figure 2** is a schematic illustration of such a system 100. It may include a processor 101 connected via a bus 102 to the NVM first memory 103 and to at least one second memory 104 among a cache memory, a random access memory (RAM), another NVM memory or a ROM. It may also include a read-only memory (ROM) 105.

The system 100 may further include a connector 106 connected to the processor.

The system 100 may also include input/output means 107 providing interfaces to the user of the system 100, such as one or more screens, loudspeakers, a mouse, tactile surfaces, a keyboard etc...

The system 100 further includes a first memory charge pump 108 operable to program memory areas of the first memory.

The invention takes place in the context of the execution of a security related process using as input security data stored in the first or second memory and performing at least a first operation. Such a security related process may for example be a cryptographic process generating a ciphered value or a signature, or an operation copying a secret key. Such security data may be sensitive data such as identity data or a secret key. It may also comprise the code to be executed to perform some operations of the security related process.

The security related process may comprise a write operation in a non-volatile memory as a routine operation, for example for updating a counter indicating a number of time a particular process or a key has been used. It may also comprise such a write operation as a counter measure when an attack is detected during the execution of the security related process. For example, if an attack is detected during the execution of this at least one operation, a NVM programming of a memory area is requested in order to update in the NVM a security counter value indicating a number of time an attack has been detected . In the following paragraphs, it is supposed that the memory area programmed by the NVM programming operation is located in a first memory row of the first memory.

The system may further comprise one or more hardware security sensors or it may be configured for executing a software countermeasure, such that these sensors or software countermeasure are able to detect an abnormal behavior likely to be the result of an attack. In such a case, the programming operation of the first memory may comprise writing, in the first memory, permanent security counters logging some abnormal behavior detected by said hardware security sensor or said software countermeasure.

As shown on Figure 1, when a programing operation of a memory area of a first row of the first memory of the system is requested, the following steps have to be performed:
- A configuration step during which operations preparing the NVM programming are executed (CPU execution).
- A row opening step during which the row to be programmed is opened. The duration of this step is called T1.
- A pump charging step during which the charging pump of the first memory is charged. The duration of this step is called T2.
- A programming step during which NVM programming is performed using the charged charge pump. The duration of this step is called T3.
- A row closing step during which the programmed row is closed. The duration of this step is called T4.

The main idea of the invention, in order to make such a programming of the first memory invisible to an attacker, is to anticipate the pump charging step and row opening step at the very beginning of the execution of the security related process. By doing so, the charging pump is already ready to program the first memory when such a programming is required and the programming step may be performed much more quickly, without inducing any power consumption spike.

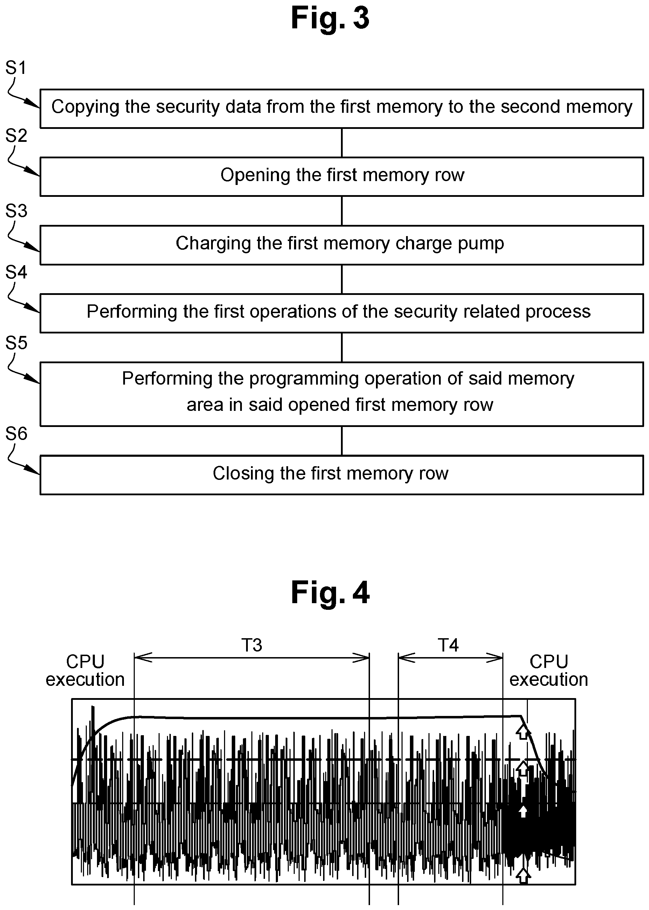

The following paragraphs describe more precisely the steps of the method according to the invention, shown on **Figure 3****,** performed by the system for executing a security related process comprising at least a first operation and a subsequent programming operation of a memory area of a first memory row of the first memory.

During a first step S1, the system may copy the security data from the first memory to the second memory. This operation is necessary when the security data are not already stored in the second memory, in order to keep the security data available after the charge pump of the first memory has been charged, which will be performed in the next step. Indeed, charging the charge pump makes it impossible to perform any reading operation in the first memory until the first memory programming is performed, the pump discharged and the row is closed. Copying the security data to the second memory guaranties that the processor will be available to read it when the data is needed as input for executing operations of the security related process. This first step is performed if needed as soon as the execution of the security related process is triggered.

In a second step S2, the system opens the first memory row of the first memory. At the end of this step, the system is ready to program a memory area of the first memory row despite no programming request has been issued yet.

In a third step S3, the system charges the first memory charge pump. This step may be performed either before or after the second step S2.

In a fourth step S4, the system performs the first operations of the security related process, based on the security data from the second memory. During this step, the security data, needed as input data to the first operations, may not be accessed in the first memory because the charge pump is in a charged state. Therefore, the processor of the system reads the security data in the second memory where it has been copied if needed during the first step described above. At the end of the first operations, a programming of the first memory may be requested, either by the first operations themselves, or because an abnormal behavior was detected during the execution of the first operations and because for example the update of a counter or a log in the first memory is needed.

In a fifth step S5 the programming operation of said memory area in said opened first memory row is performed using said charged charge pump.

The fifth step S5 may be skipped when no programming operation of the NVM is requested, for example when such a programming would be triggered by the detection of an attack but no attack has been detected.

In a sixth step S6 the first row may be closed.

The current consumption of the system resulting from these steps is shown on **Figure 4****.** Contrarily to Figure 1, no consumption spike appears from the start of the execution of the first operations to the closing of the first row. Indeed, in the method according to the invention, the charge pump has already been charge, in the third step S3, when the first operations are performed in the fourth step S4.

In addition, the time between the issuance of the request to program the first memory, issued by the first operations or because an attack has been detected at some point during their execution, and the closing of the first row is much shorter. On Figure 1 it was at least equal to T1+T2+T3+T4 = 12 + 6.6 + 18 + 7.7 µs. On figure 4, it is close to T3+T4 = 18 + 7.7 µs since the pump charging and row opening have been performed beforehand.

A spike in the current consumption may still be visible when the charge pump is charged, before the execution of the first operations. In order to reduce or avoid such a spike, the charge pump may be charged at a predetermined lower frequency, for example up to 8 times lower than usual.

According to a second aspect, this invention therefore relates also to a computer program product directly loadable into the memory of at least one computer, comprising software code instructions for performing the steps of the methods according to the first aspect when said product is run on the computer.

According to a third aspect, this invention therefore relates also to a non-transitory computer readable medium storing executable computer code that when executed by an system 100 above described performs the methods according to the first aspect.

According to a fourth aspect, this invention therefore relates also to an system 100 above described comprising a processor 101, a first memory 103, a first memory charge pump 108 and a second memory 104 configured to perform the methods according to the first aspect.

## Claims

1. A method for executing a security related process comprising at least a first operation and a subsequent programming operation of a memory area in a first memory row of a first memory (103) of a system (100) and using as input security data stored in a second memory (104) of said system (100), wherein said first memory is a non-volatile memory and said system comprises a first memory charge pump (108), said method comprising, when the execution of said security related process is triggered:
- opening (S2) the first memory row,
- charging (S3) said first memory charge pump,
- performing (S4) said first operations of the security related process, based on said security data from the second memory,
- performing (S5) said programming operation of said memory area in said opened first memory row using said charged charge pump.

2. The method of claim 1, comprising, copying (S1) said security data from the first memory to the second memory before charging the first memory charge pump or opening the first memory row.

3. The method of claim 1 or 2, wherein, said system comprising a hardware security sensor or being configured for executing a software countermeasure, said programming operation comprises writing, in said first memory, permanent security counters logging some abnormal behavior detected by said hardware security sensor or said software countermeasure.

4. The method according to any of claims 1 to 3, wherein said second memory (104) is among a cache memory, a Random Access memory (RAM), a Non Volatile memory (NVM) or a Read Only memory (ROM).

5. The method according to any of claims 1 to 4, wherein said first memory charge pump is charged at a predetermined frequency such that it induces no visible spike of the current consumption of the system.

6. A computer program product directly loadable into the memory of at least one computer, comprising software code instructions for performing the steps of the method according to any one of claims 1 to 5 when said product is run on the computer.

7. A non-transitory computer readable medium storing executable computer code that when executed by an system (100) comprising at least one processor (101), a first memory (103), a first memory charge pump (108) and a second memory (104) performs the steps of the method according to any one of claims 1 to 5.

8. System (100) comprising a processor (101), a first memory (103), a first memory charge pump (108) and a second memory (104) configured to perform the steps of the method according to any one of claims 1 to 5.
